Europäisches Patentamt

European Patent Office

Office européen des brevets

(11) Veröffentlichungsnummer: **0 514 802 A2**

# EUROPÄISCHE PATENTANMELDUNG

(21) Anmeldenummer: **92108325.9**

(51) Int. Cl.⁵: **B65G  17/12**

(22) Anmeldetag: **18.05.92**

(30) Priorität: **24.05.91 CH 1540/91**

(43) Veröffentlichungstag der Anmeldung:
**25.11.92 Patentblatt  92/48**

(84) Benannte Vertragsstaaten:
**AT DE DK ES FR GB IT SE**

(71) Anmelder: **C. HOEGGER INGENIEURBUREAU AG**
**Magdenauerstrasse 34**
**CH-9230 Flawil(CH)**

(72) Erfinder: **Hoegger, Cornel**
**Weideggstrasse 35**
**CH-9230 Flawil(CH)**

(74) Vertreter: **White, William**
**Novator AG, Thurgauerstrasse 40, Postfach 8815**
**CH-8050 Zürich(CH)**

(54) **Vorrichtung zum Speichern und Transportieren von Gegenständen, Einbauanordnung für die Vorrichtung und Verfahren zum Betrieb in einem geschlossenen Behältnis.**

(57) Die Speicheranordnung für den Betrieb in einem Autoklaven mit liegendem Zylinder (60) umfasst eine Transportkette (10). Diese wird beidseits über Umlenkkettenräder (12) hin und her geführt. Mit der Transportkette (10) werden Tablare (1) transportiert. Die Parallelführung dieser Tablare (1) wird mittels Parallelführungsrädern (16) bewirkt, die synchron zu den Umlenkkettenrädern (12) laufen. Die Umlenkket-tenräder (12) sind unter sich mit Leerlaufzahnrädern (15) verbunden, so dass sie gesamthaft ein starres Antriebsgebilde darstellen. Mit einer derartigen Speicheranordnung lässt sich ein zylindrischer Autoklav dicht bepacken und Erwärmung mittels Dampf und Kühlung durch berieseln lassen sich bei laufender Transportkette leicht bewerkstelligen.

Fig.7

## Fig. 6

Die vorliegende Erfindung betrifft eine Vorrichtung gemäss dem Oberbegriff des unabhängigen Anspruchs 1, ferner eine Einbauanordnung gemäss dem Oberbegriff des Anspruchs 8 und ein Verfahren zum Betrieb als Autoklav gemäss dem Oberbegriff des Anspruchs 9.

Autoklaven und Vorrichtungen zum Beschicken derselben sind bekannt. So ist beispielsweise der Turmautoklav CPS 2000 der Firma Lagarde in Moutelimar Cedex, Frankreich bekannt geworden, bei dem ein Transportförderer mit einem endlosen Stahlband vorhanden ist, das wendelartig in einem Turm bewegt wird. Der Vorteil davon wird angegeben, dass weniger Raum beansprucht wird. Aber es ist offensichtlich, dass im Zentrum des Turmes ein unbenützbarer Hohlraum gebildet ist, so dass schliesslich doch viel Raum als verloren betrachtet werden kann.

Daneben ist von A. Paul Gronemeyer in D-3470 Höxter 1 ein sogenanntes Heliflex-Speichersystem bekannt geworden, das mit zwei Türmen ausgerüstet ist und die zu kühlenden Gegenstände in zwei Wendelsystemen transportiert werden. Auch hier werden die Gegenstände nur peripher in den Türmen transportiert und der jeweilige Raum bleibt leer.

Es besteht nun ein Bedarf, einen Speicher für Gegenstände zu schaffen, bei dem kein unbenützter Hohlraum vorhanden ist und die vorliegende Erfindung hat diese Aufgabe zu lösen.

Erfindungsgemäss wird dies mit einer Vorrichtung zum Speichern und Transportieren gemäss den Merkmalen des unabhängigen Anspruchs 1 erfüllt.

Mit dieser Vorrichtung kann ein Autoklav bestückt werden bei dem in einem liegenden Hohlzylinder der gesamte Hohlraum mit Ausnahme der gewölbten Aussenseiten als Speicher benützbar ist, so dass gemäss den Merkmalen im kennzeichnenden Teil des Anspruchs 8 eine hohe Speicherdichte erreichbar ist.

Ein derart gebauter Autoklav kann mit einem Verfahren gemäss den Merkmalen im kennzeichnenden Teil des Anspruchs 9 betrieben werden.

Die Erfindung wird nachfolgend an Hand eines Ausführungsbeispiels unter Zuhilfenahme der Zeichnung erläutert. In der Zeichnung zeigen:

Fig. 1 eine perspektivische Ansicht eines Tragmittels,

Fig. 2 eine schematische Darstellung der Umlenkstellen von jeweils einer Lage zur anderen und der Vertikaltransport von unterster zu oberster Lage,

Fig. 3a eine Draufsicht auf die Anordnung zum Paralleltransport eines Tragmittels von einer Lage zur nachfolgenden Lage in vergrössertem Massstab, gemäss Pfeil IIIa in Fig. 2,

Fig. 3b eine Draufsicht auf die Anordnung zum Paralleltransport eines Tragmittels im Rückkehrweg in vergrössertem Massstab, gemäss Pfeil IIIb in Fig. 2,

Fig. 4 eine Ansicht des Vertikaltransportweges mit dem Uebergang auf die oberste Lage,

Fig. 5 ein Ausschnitt einer Schnittansicht gemäss Schnittlinie V-V in Fig. 2,

Fig. 6 eine Schnittansicht eines mit der Speicher- und Transporteinheit gemäss Fig. 1 bis 5 bestückten Autoklaven und stark verkleinertem Massstab, und

Fig. 7 eine Ansicht von oben der Beschickungsseite des Autoklaven gemäss Fig. 6 mit geöffneter Türe.

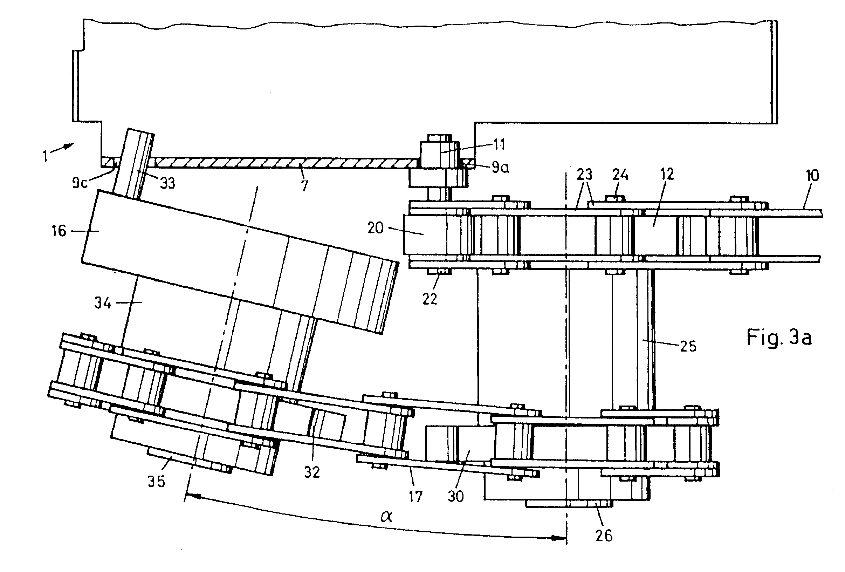

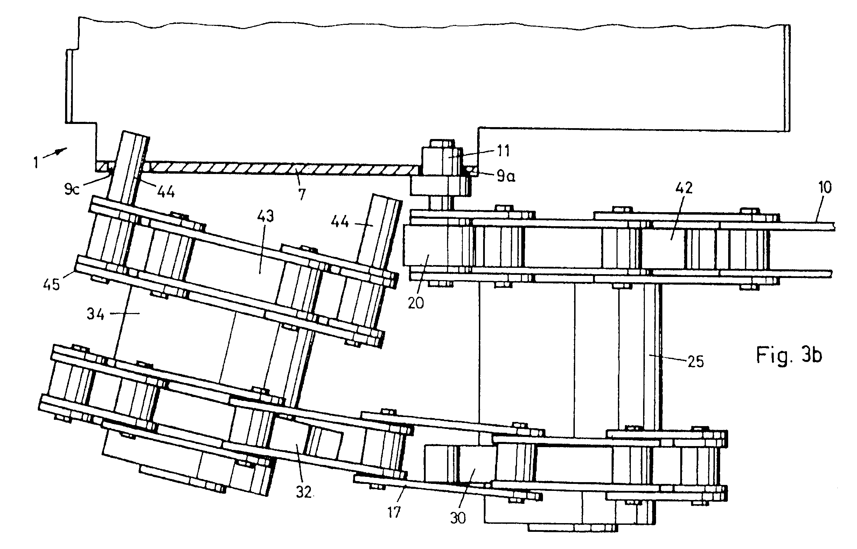

Fig. 3 eine schematische Ansicht eines zweiten Ausführungsbeispiels. Das Transportmittel ist in dieser Ausführungsform als Tablar 1 dargestellt. Dieses Tablar hat eine Tragfläche 2 mit einer grossen Anzahl Löcher 3 für den Durchtritt des Dampfes zum Aufheizen und des Kaltwassers zum Kühlen. Auf beiden Längsseiten ist die Tragfläche 2 mit Haltemitteln versehen, die einerseits als unter einem stumpfen Winkel aufgestellter Wandstreifen 4 und anderseites als einzelne senkrecht aufgestellte Lappen 6 ausgebildet sind. Auf seinen Schmalseiten besitzt das Tragmittel zwei gegeneinander versetzt angeordnete Transportlappen 7, 8, die von der Tragfläche 2 senkrecht nach oben abstehen. Diese Transportlappen 7, 8 weisen je zwei Dornöffnungen 9a, 9b, 9c, 9d auf, derart, dass etwa mittig der Tragfläche 2 zwei Dornöffnungen 9a, 9b sich gegenüberliegend angeordnet sind und zwei weitere Dornöffnungen 9c, 9d je nahe der jeweiligen Endpartie, das heisst die Dornöffnung 9c im Transportlappen 7 befindet sich nahe beim Wandstreifen 4 und die Dornöffnung 9d nahe bei den aufgestellten Lappen 6.

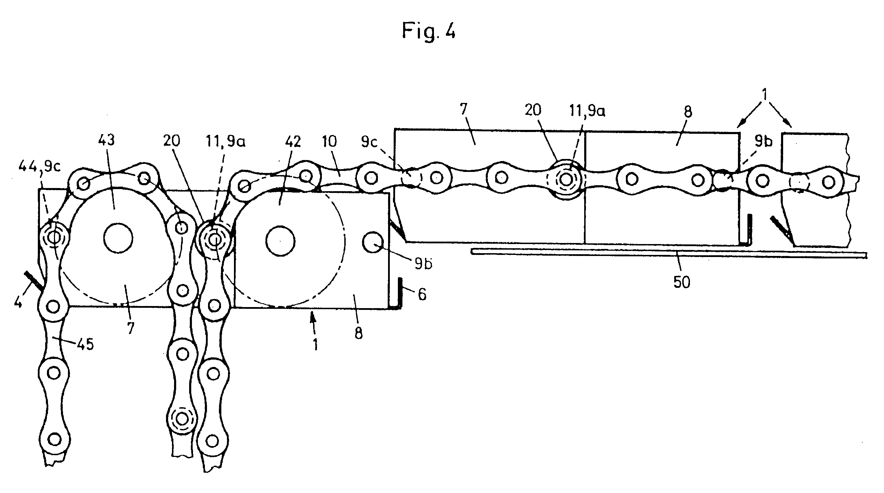

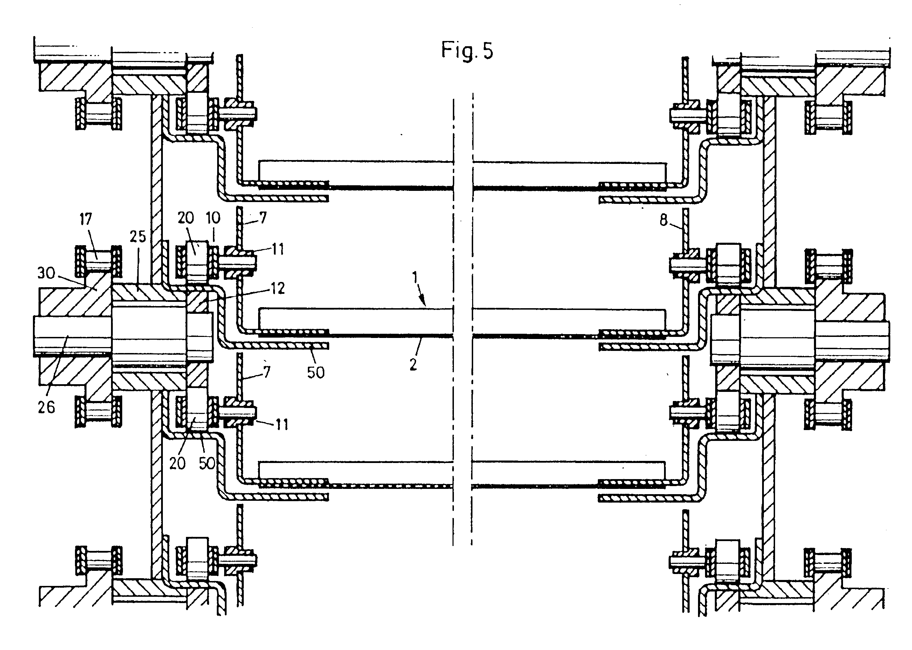

Für den Transport dieser Tablare 1 greifen Transportketten 10 beidseits mit Dornen 11 in die mittig angeordneten Dornöffnungen 9a, 9b ein. Auf den horizontalen Translationsstrecken t1...t16 liegen die Tablare 1 seitlich auf Schienen 50 (Fig. 4 und 5) auf.

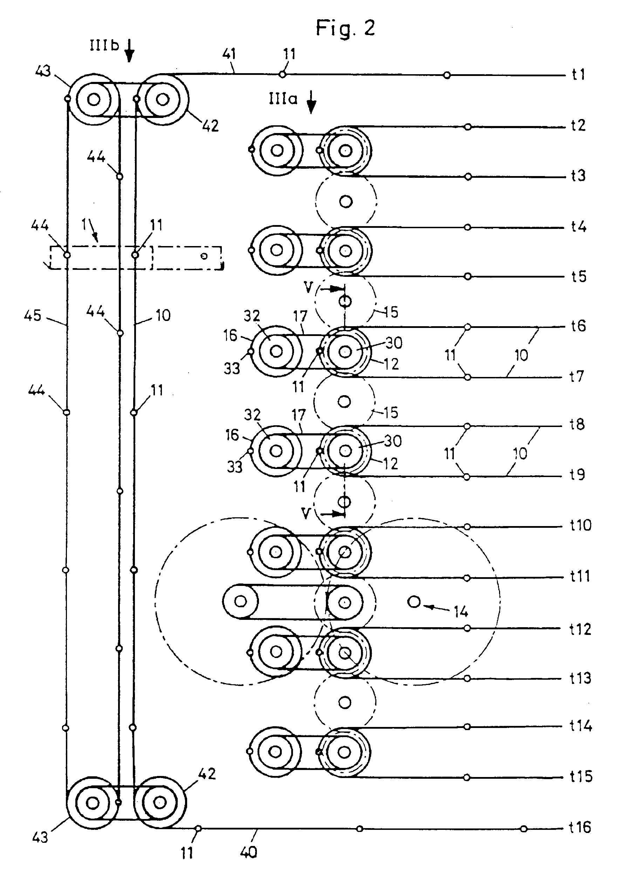

Die Transportkette 10 ist endlos und beidseits über Umlenkkettenräder 12 geführt (Fig. 2). Der Antrieb der Transportkette 10 erfolgt mittels eines Motors 13 und einem Zahnradgetriebe 14. Zwischen den einzelnen Umlenkkettenrädern 12 sind Uebertragerzahnräder 15 vorhanden, so dass für jedes Paar horizontaler Bahnen die Transportkette 10 angetrieben wird und damit der Zug auf die Transportkette 10 für deren Bewegung verkleinert ist.

Wie Fig. 2 und 3a zeigen, ist jedem Umlenkkettenrad 12 ein Parallelführungsrad 16 zugeordnet. Jedes Parallelführungsrad 16 wird vom zugehörigen Umlenkkettenrad 12 über eine Schwenkachse 17 angetrieben.

Fig. 3a, 3b und 5 zeigen solche Umlenkstellen in vergrössertem Massstab. Das Tablar 1 wird, wie weiter oben beschrieben durch die Transportkette 10 mittels des Transportdornes 11, der in eine Dornöffnung 9a eingreift bewegt. Wie deutlich zu sehen ist, ist der Kettenbolzen als Rolle 20 ausgebildet und entsprechend ist das Umlenkkettenzahnrad 12 mit Zahnzwischenräumen ausgebildet, in die diese Rollen 21 spielfrei eingreifen können. Damit ist gewährleistet, dass der Antrieb spielfrei erfolgt. Die Achse 22 der Rolle 20 ist der übliche Kettenbolzen 24 und trägt beidseits die Kettenlaschen 23. Die Achse 21 ist verlängert und trägt den Dorn 11. Das Umlenkkettenzahnrad 12 ist auf einer Nabe 25 befestigt, die auf einer Achse 26 drehbar gehalten ist. Diese Nabe 25 trägt ein weiteres Hilfskettenzahnrad 30 für die Sicherung der Parallelführung. Mittels einer Schwenkkette 17 wird die Rotation der Umlenkkettenzahnrades 12 auf ein Parallelführungszahnrad 32 übertragen, das somit den gleichen Durchmesser und die gleiche Anzahl Zähne hat, wie das Hilfskettenzahnrad 30. Die Nabe 34 des Hilfskettenzahnrades 30 dreht somit synchron mit dem Umlenkkettenzahnrad 12 und dies bewirkt die synchrone Rotatiaon des Parallelfülhrungsrades 16, wobei die Richtung A der Rotationsachse gegenüber der Richtung B der Achse des Umlenkkettenrades um einen Winkel $\alpha = 14$ Grad gedreht ist.

Wie aus Fig. 3a und 3b ersichtlich ist, dient diese Schrägstellung dazu, dass der Parallelführungsdorn 33 in die Dornöffnung 9c eingreifen kann und nach einem Weg der um 180 Grad führt wieder daraus herauskommen, ohne die gleichmässige Bewegung des Tablars 1 zu beeinflussen.

Fig. 5 zeigt eine geschnittene Darstellung gemäss der Schnittlinie V-V in Fig. 2, wobei allerdings die Uebertragerzahnräder 15 aus Fig. 2 weggelassen sind. Die einzelnen Teile sind schon weiter oben, anhand der Fig. 2 und 3 beschrieben, so dass sich eine eingehende Beschreibung erübrigt. Wie deutlich erkennbar ist, ist zwischen den Tablaren 1 kein Zwischenraum vorhanden, so dass eine grosse Packungsdichte möglich ist.

Fig. 2, 3b und 4 zeigen Details der Umkehrbahn der Transportkette 10 vom untersten Trum 40 zum obersten Trum 41 unten und oben ist dazu wieder ein Umlenkkettenzahnrad 42 vorhanden, das prinzipiell identisch ausgebildet sein kann, wie das Umlenkkettenzahnräder 12 gemäss Fig. 2 und 3a. Jedem der beiden Umlenkkettenzahnräder 42 ist ein Paralleführungszahnrad 43 zugeordnet, das auch gleich wie das Parallelführungsrad 16 ausgebildet sein kann, aber grundsätzlich den gleichen Durchmesser wie das Umlenkkettenzahnrad 42 haben muss. Auch hier ist eine Antriebsanordnung gemäss Fig. 3b vorgesehen, damit Synchronismus zwischen Umlenkkettenzahnrad 42 und Parallelführungszahnrad 43 herrscht.

Bei dieser Umlenkstelle wird jedoch das Tablar 1 neben dem Transportmitteln eines Dorns 11 an der Transportkette 10 noch mit jeweils einen Dorn 44 transportiert, welcher Dorn 44 gleicherwei weils e an einem verlängerten Kettenbolzen einer Parallelführungskette 45 angebracht ist.

Die obere Umlenkung der Umlenkbahn ist in Fig. 4 deutlich dargestellt, wo auch ersichtlich ist, dass Transportkette und Parallelführungskette 45 gleich ausgebildet sein können.

Durch eine Anordnung der Umlenkung der Transportkette 10 für Tablare 1 ist gewährleistet, dass in einem gegebenen Raum eine grösstmögliche Packungsdichte erhältlich ist.

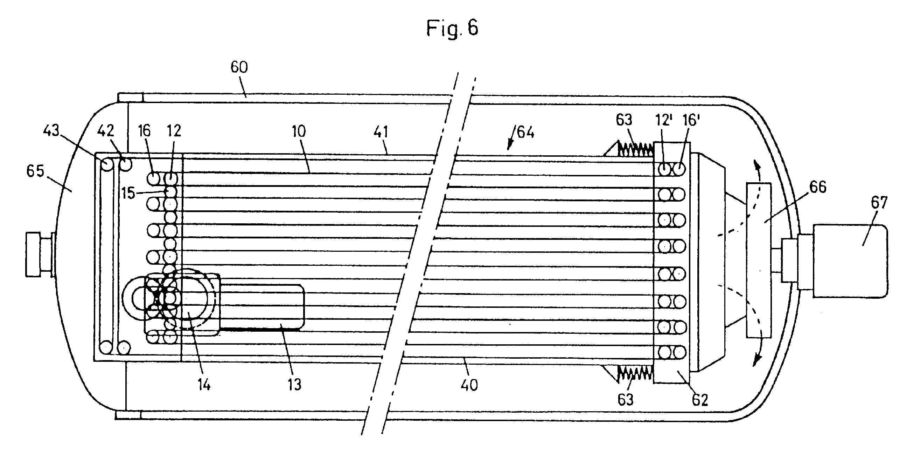

Dies prädestiniert eine solche Speicheranordnung zur Verwendung in einem geschlossenen Behältnis. Fig. 6 zeigt ein Ausführungsbeispiel für einen liegenden Autoklaven der als zylindrischer Kessel 60 ausgebildet ist.

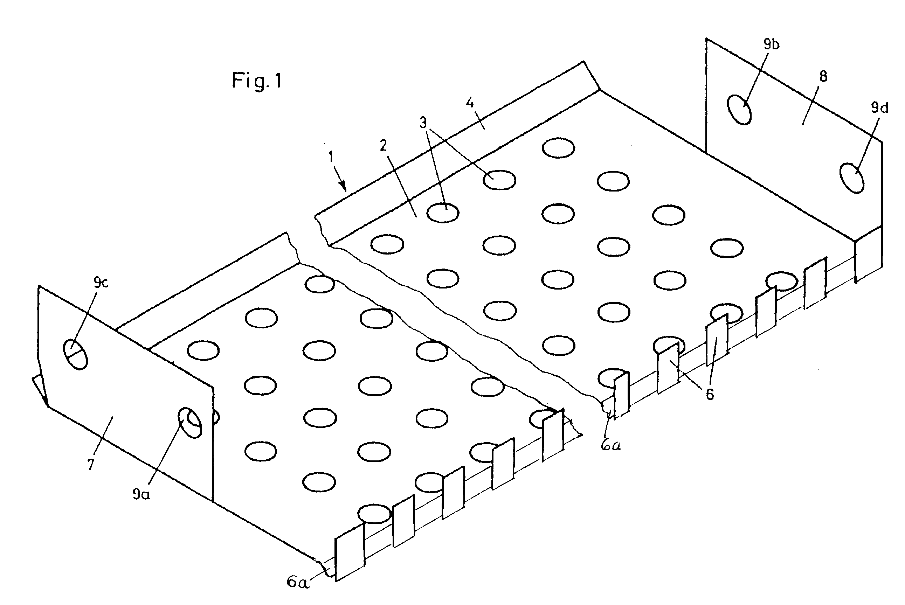

In diesem Kessel 60 befindet sich eine Anordnung, wie sie an Hand der Fig. 1 bis 5 weiter oben beschrieben wurde, mit einer Transportkette 10, die mittels mehrerer Umlenkkettenrädern 12 und Parallelführungsrädern 16 beidseits einer Translationsstrecke 61 eine hin- und herführende Speicheranordnung bildet. Links befindet sich die Umlenkbahn gemäss der Beschreibung nach Fig. 2 und 4. Rechts in Fig. 6 sind die Umlenkkettenräder 12' und die Parallelführungsräder 16' in einem Rahmengestell 62 gelagert, so dass mittels Federn 63 der Längenausgleich bei wechselnden Temperaturen ausgeglichen werden kann. Wie üblich hat der Autoklav eine Beschickungsöffnung 64 mit einer hermetisch verschliessbaren Autoklaventüre 65.

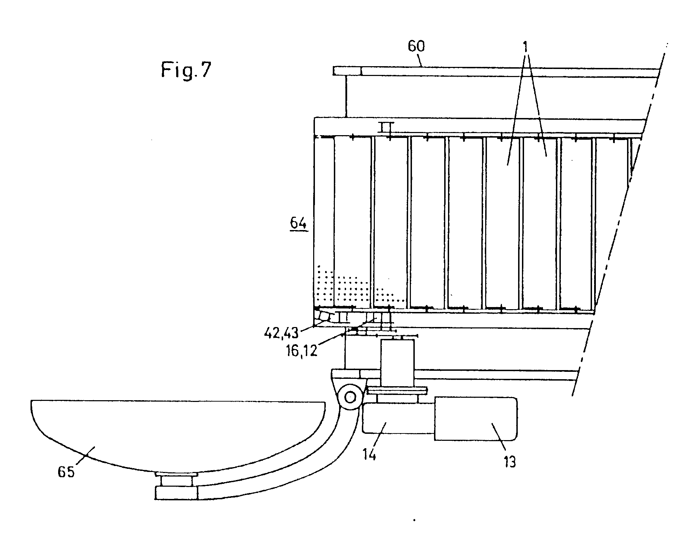

Fig. 7 zeigt die obersten Trum 41 der Speicheranordnung mit einer Anzahl Tablaren 1, sowie den oberen Umlenkkettenrändern 42 und Parallelführungskettenrädern 43. Auch ist der Antrieb 13, 14 für die Transportkette 10 in Fig. 7 ersichtlich.

Am gegenüberliegenden Ende des Autoklaven befindet sich ein Ventilator 66 mit seinem Antriebsmotor 67 ausserhalb des Autoklaven 60.

Für den Betrieb der Speicheranordnung im Autoklaven wird die Transportkette 10 schrittweise bewegt, um an einer unteren Stelle die Tablare 1 zu entladen und an einer oberen Stelle zu beladen. Bei einer etwa 8 m langen Speicheranordnung in einem Zylinder von etwa 1,8 m Durchmesser können etwa 2000 Einheiten pro Stunde eingefüllt bzw. entnommen werden.

Sobald die neue Beschickung durchgeführt ist wird mittels Dampf geheizt. Die Transportkette 10 kann während dieser Zeit kontinuierlich laufen, so dass sich jedes Tablar 1 mindestens einmal an jeder Stelle des Autoklaven befindet und somit die Wärme des Dampfstromes an verschiedenen Stellen ausgenützt wird, und demzufolge da gut gleichmässig erwärmt wird.

Nach der vorgesehenen Kochzeit von einer bestimmten Länge wird der Dampf abgestellt und das Gut mittels Wasser beregnet oder berieselt. Damit braucht es kein Bad und die Tablare sind unten am wärmsten und kehren zur kühlsten Stelle oben zurück. Dies hat den Vorteil, dass mit wenig Wasser, das zirkuliert, eine gute und rasche Kühlung erhalten werden kann, was mit einer Badkühlung nicht möglich wäre.

Es genügt dabei, dass die Kette etwa 1 1/2 mal umläuft und so etwa 1/4 Stunde für die Kühlung benötigt wird.

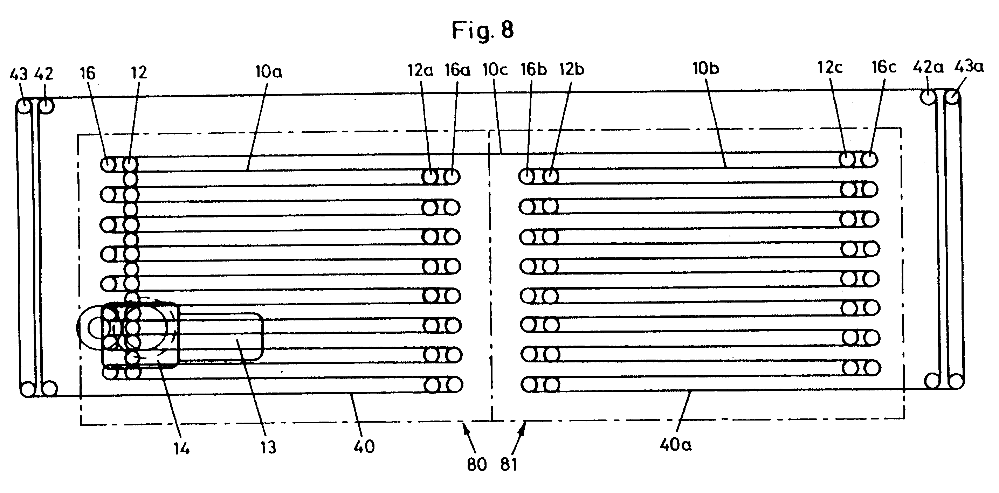

Dieselbe Kettenanordnung bringt auch bei Kühl- oder Wärmeanlagen platzvorteile mit sich. Bis anhin wurde die Kühl- oder Wärmeanlage in gestreckter Bauweise mit Baulängen von bis zu 60m gebaut. Durch eine Anordnung gemäss Fig. 8 lässt sich die Baulänge bis auf etwa einen drittel verringern.

Dementsprechend ist vorgesehen, eine Kette 10a in einem ersten Gehäuse 80 von unten nach oben zu führen, wobei beidseits die bekannten und weiter vorn beschriebenen Parallenumlenker gemäss Fig. 3a für die parallele Verschiebung der Körbchen mittels zweier Umlenkrollen 12. 16 und 12a, 16a vorgenommen wird. Ebenso ist für den Antrieb ein Motor 13 mit einem Getriebe 14 vorhanden. Die Beschickung geschieht links in Fig. 8.

Vom obersten Umlenkrollenpaar wird dann die Kette 10a in ein zweites Gehäuse überführt. In diesem Gehäuse 81 werden dann die Körbchen stufenweise ebenfalls mit Umlenkrollenpaaren 12, 16, 12a, 16a nach unten bewegt. Unten werden sie dann mit dem Kettenabschnitt 40a nach rechts in Fig. 8 hinausbefördert und können dann beispielsweise an der Luft oben über den den beiden Gehäusen 80,81zurück an den Anfang vor dem Gehäuse 80 bewegt werden.

Damit könnte also im Gehäuse 80 je nachdem eine Erwärmung des Gutes oder eine Kühlung durchgeführt werden, so dass das Gut dann im Gehäuse 81 wieder auf Umgebungstemperatur gebracht werden kann.

Für die Entldung der Körbchen hat sich gezeigt, dass bei bestimmten Gütern ein Herausziehen des Gutes mittels untergreifenden Kämmen kaum möglich ist. Im Tablar gemäss Fig 1 ist dementsprechend auf der Seite der aufstehenden Lappen 6 im Boden 2 eine Vertiefung angebracht. Diese Vertiefung 6a erstreckt sich über die gesamte Länge des Tablars. Damit kann ein Greifer mit einer angelenkten starren Schaufel oder einer elastischen Greifkante das verpackte Gut von unten herauf vom Boden 2 des Tablars 1 ablösen und herausziehen.

**Patentansprüche**

1. Vorrichtung zum Speichern und Transportieren von Gegenständen mittels einer endlosen, in mehreren parallelen Lagen geführten Transportkette (10), an der aneinandergereihte Tragmittel (1) für die Gegenstände vorhanden sind, dadurch gekennzeichnet, dass die Tragmittel (1) als Tablare, Körbchen oder offene Schalen ausgebildet sind und beidseits an je einer Transportkette (10) gehaltert sind, und dass an den Umlenkstellen (51) zwischen jeweils zwei sich folgenden Lagen Mittel (12,16,17) zur Parallelführung der Tragmittel (1) in Horizontallage vorhanden sind.

2. Vorrichtung nach Patentanspruch 1, dadurch gekennzeichnet, dass die Tragmittel (1) je auf ihren bei den Transportketten (6) befindlichen Seiten mit Seitenwänden (7,8) versehen sind, und dass die Transportketten (10) mit Zapfen (11) zum Eingreifen in wenigstens angenähert mittig in den Seitenwänden (7,8) angeordnete Löcher (9a,9b,9c,9d) versehen sind.

3. Vorrichtung nach Patentanspruch 2, dadurch gekennzeichnet, dass zur Parallelführung der Tragmittel (1) in den Umlenkstellen Parallelführungsräder (16) vorhanden sind, die je wenigstens einen Zapfen (34) aufweisen, um in randwärts angeordnete Löcher (9c,9d) in den Seitenwänden (7,8) einzugreifen, und deren Drehachse (A) mit der Drehachse (B) der Umlenkkettenräder (12) für die Transportketten (10) einen spitzen Winkel einschliessen.

4. Vorrichtung nach Patentanspruch 3, dadurch gekennzeichnet, dass die Parallelführungsräder (16) und die Umlenkkettenräder (12) auf ihren dem Transportweg für die Tragmittel (1) abgewandten Seite mit Hilfskettenräder (30,32) versehen sind, über die eine Schwenkkette (17) zum synchronen Antrieb der Parallelführungsräder (16) und Umlenkkettenräder (12) gelegt ist.

5. Vorrichtung nach einem der vorangehenden Patentansprüche 1 bis 4, dadurch gekennzeichnet, dass die Teilung für die Abstände der Tragzapfen (11) an den Transportketten (10) und die Abstände der Führungszapfen (34) auf dem Umfang der Parallelführungsräder (16) gleich gross oder ein gerades Vielfaches davon sind.

**6.** Vorrichtung nach Patentanspruch 5, dadurch gekennzeichnet, dass die beidseitigen Umlenkkettenräder (12) zur Bildung der parallelen Lagen je mit einem Parallelführungsrad (16) gekoppelt sind, derart, dass für die eine Umlenkseite die Eingriffe der Führungszapfen (34) der Parallelführungsräder (16) in Löcher (9d) nahe der einen Endpartie der Seitenwände (8) und für die andere Umlenkseite die Eingriffe der Führungszapfen (34) der Parallelführungsräder (16) in Löcher (9d) nahe der anderen Endpartie der Seitenwände (7) erfolgen.

**7.** Vorrichtung nach Patentanspruch 6, dadurch gekennzeichnet, dass die Antriebskettenräder (12) bei beiden Umlenkstellen einerseits über Leerlaufzahnräder (15) gekoppelt sind und nur ein Kettenrad durch einen Antriebsmotor (13,14) angetrieben ist.

**8.** Einbauanordnung für die Vorrichtung nach einem der Patentansprüche 1 bis 7 in ein längliches Gehäuse, dadurch gekennzeichnet, dass das Gehäuse (60) einerends einen aufklappbaren Deckel (65) und andernends einen Ventilator (66) aufweist, und dass eine Entlade- und eine Beladevorrichtung vor der Seite mit dem aufklappbaren Deckel (65) vorhanden ist, um die Gegenstände von jeweils einem Trägermittel (1) auf dem Rückkehrweg von unterster zu oberster Lage zu entnehmen und/oder durch andere Gegenstände zu ersetzen.

**9.** Verfahren zum Betrieb einer Anordnung gemäss Patentanspruch 8 in einem geschlossenen Behältnis zum erhitzen und/oder kühlen, dadurch gekennzeichnet, dass während der Be- und Entladung die Transportkette (10) schrittweise bewegt, und dass die Transportkette (10) sowohl bei dem Erwärmungsvorgang als auch bei der nachfolgenden Kühlung gleichmässig bewegt wird.

**10.** Vorrichtung nach einem der Ansprüche 1 bis 3, dadurch gekennzeichnet, dass die Tragmittel (1) an seinem Boden (2) von diesem wenigstens angenähert in die Höhe abstehende Laschen(6) aufweist, und dass angrenzen an diese Laschen (6) im Boden eine sickenähnliche Längsnut (6a) vorhanden ist.

Fig. 1

EP 0 514 802 A2

## Fig. 2

Fig. 3a

Fig. 3b

9c
1
44
7
11
9a
43
44
42
10
45
20
34
25
32
17
30

EP 0 514 802 A2

10

# Fig. 4

EP 0 514 802 A2

Fig. 5

Fig. 6

Fig.7

Fig. 8